# EUROPEAN PATENT APPLICATION

(11) **EP 4 793 564 A1**
(43) Date of publication of application: **19.08.2026**
(21) Application number: 26157754.8
(22) Date of filing: 11.02.2026
(51) Int. Cl.: F24F 11/38, F24F 11/61, F24F 11/63, F24F 11/64, F24F 11/67

(54) **AIR CONDITIONING SYSTEM, INSPECTION METHOD, COMPUTER PROGRAM, STORAGE MEDIUM, AIR CONDITIONER, AND INSPECTION TERMINAL**

(30) Priority: 13.02.2025 JP 2025021470
(71) Applicant: Panasonic Intellectual Property Management Co., Ltd., Kadoma-shi, Osaka 571-0057 (JP)
(72) Inventor: OHTA, Kohei, Kadoma-shi, Osaka, 571-0057 (JP); OTSUKA, Kyoko, Kadoma-shi, Osaka, 571-0057 (JP)
(74) Representative: Eisenführ Speiser

(57) **Abstract**

An air conditioning system according to a first exemplary embodiment includes an air conditioner and inspection terminal (21) that inspects a remaining life of the air conditioner. The air conditioner includes controller (15) that performs operation control by switching the air conditioner between a first operation mode and a second operation mode, and storage unit (18) that stores a first operation time of operation in the first operation mode and a second operation time of operation in the second operation mode. Inspection terminal (21) includes calculation unit (26) that calculates the remaining life of the air conditioner from a first consumption life of the air conditioner calculated based on the first operation time and a second consumption life of the air conditioner calculated based on the second operation time, and output unit (24) that outputs information on the remaining life of the air conditioner.

## Description

### BACKGROUND

### 1. Technical Field

The present disclosure relates to an air conditioning system, an inspection method, a computer program, a storage medium, an air conditioner, and an inspection terminal.

### 2. Description of the Related Art

Businesses have been conventionally proposed in which air conditioners are repeatedly lent to different users by lease or subscription. This kind of business is desired to lend only an air conditioner having a sufficient remaining life to a subsequent user to prevent the life of the air conditioner from ending while the air conditioner is lent to the subsequent user. For this purpose, the remaining life of the air conditioner needs to be predicted by inspecting the air conditioner at the timing of returning from rental. Thus, PTL 1 discloses an air conditioning system that predicts a remaining life of an air conditioner based on installation environment of the air conditioner.

### Citation List

### Patent Literature

PTL 1: Unexamined Japanese Patent Publication No. 2024-38458

### SUMMARY

Unfortunately, the air conditioner has setting environment and a use frequency that are different for each user to whom the air conditioner is lent. For this reason, the remaining life of the air conditioner returned from the rental is less likely to be accurately predicted.

The present disclosure provides an air conditioning system, an inspection method, a computer program, a storage medium, an air conditioner, and an inspection terminal, which are capable of more accurately predicting a remaining life of an air conditioner.

An air conditioning system according to an aspect of the present disclosure includes an air conditioner and an inspection terminal that inspects a remaining life of the air conditioner. The air conditioner includes a controller that performs operation control by switching the air conditioner between a first operation mode and a second operation mode, and a storage unit that stores a first operation time of operation in the first operation mode and a second operation time of operation in the second operation mode. The inspection terminal includes a calculation unit that calculates the remaining life of the air conditioner from a first consumption life of the air conditioner calculated based on the first operation time and a second consumption life of the air conditioner calculated based on the second operation time, and an output unit that outputs information on the remaining life of the air conditioner.

An air conditioning system according to an aspect of the present disclosure includes an air conditioner and an inspection terminal that inspects a remaining life of the air conditioner. The air conditioner includes a controller that performs operation control by switching the air conditioner between a first operation mode and a second operation mode, a storage unit that stores a first operation time of operation in the first operation mode and a second operation time of operation in the second operation mode, a first component, and a second component. The inspection terminal includes a calculation unit that calculates a remaining life of the first component from a first consumption life of the first component calculated based on the first operation time and a second consumption life of the first component calculated based on the second operation time, and that calculates a remaining life of the second component from the first consumption life of the second component calculated based on the first operation time and the second consumption life of the second component calculated based on the second operation time. The inspection terminal includes an output unit that outputs information on the remaining life of the first component and information on the remaining life of the second component.

An inspection method according to an aspect of the present disclosure is performed in an air conditioning system including an air conditioner capable of performing operation control by switching between a first operation mode and a second operation mode. The inspection method includes a storage step of storing a first operation time of operation in the first operation mode and a second operation time of operation in the second operation mode. The inspection method also includes a calculation step of calculating a remaining life of the air conditioner from a first consumption life of the air conditioner calculated based on the first operation time and a second consumption life of the air conditioner calculated based on the second operation time. The inspection method further includes an output step of outputting information on the remaining life of the air conditioner.

A computer program according to an aspect of the present disclosure causes an air conditioning system to perform the inspection method described above.

A storage medium according to an aspect of the present disclosure is a non-transitory computer-readable storage medium in which a computer program is stored, and the computer program is executed by a processor to implement the inspection method described above.

An air conditioner according to an aspect of the present disclosure is capable of performing operation control by switching between a first operation mode and a second operation mode. The air conditioner includes a storage unit that stores a first operation time of operation in the first operation mode and a second operation time of operation in the second operation mode. The air conditioner also includes a calculation unit that calculates a remaining life of the air conditioner from a first consumption life of the air conditioner calculated based on the first operation time and a second consumption life of the air conditioner calculated based on the second operation time. The air conditioner also includes an output unit that outputs information on the remaining life of the air conditioner.

An inspection terminal according to an aspect of the present disclosure inspects a remaining life of an air conditioner capable of performing operation control by switching between a first operation mode and a second operation mode. The inspection terminal includes a storage unit that stores a first operation time of operation of the air conditioner in the first operation mode and a second operation time of operation of the air conditioner in the second operation mode. The inspection terminal also includes a calculation unit that calculates a remaining life of the air conditioner from a first consumption life of the air conditioner calculated based on the first operation time and a second consumption life of the air conditioner calculated based on the second operation time. The inspection terminal further includes an output unit that outputs information on the remaining life of the air conditioner.

The air conditioning system, the inspection method, the computer program, the storage medium, the air conditioner, and the inspection terminal according to the present disclosure can more accurately predict the remaining life of the air conditioner.

### BRIEF DESCRIPTION OF THE DRAWINGS

Fig. 1 is a block diagram illustrating an air conditioning system according to a first exemplary embodiment;
Fig. 2 is a block diagram illustrating a P plate and an inspection terminal according to the first exemplary embodiment;
Fig. 3 is a diagram illustrating a table representing operation time information;
Fig. 4 is a flowchart illustrating an operation of the inspection terminal according to the first exemplary embodiment;
Fig. 5 is a diagram illustrating a table representing consumption life information;
Fig. 6 is a diagram illustrating a table representing air conditioner life information;
Fig. 7 is a flowchart illustrating an operation of the inspection terminal according to a second exemplary embodiment;
Fig. 8 is a diagram illustrating a table representing a mode-specific coefficient in each component;
Fig. 9A is a diagram illustrating a table representing first component consumption life information;
Fig. 9B is a diagram illustrating a table representing n-th component consumption life information; and
Fig. 10 is a diagram illustrating a table representing component life information.

### DETAILED DESCRIPTIONS

Hereinafter, an exemplary embodiment of an air conditioning system according to the present disclosure will be described with reference to the drawings. The exemplary embodiments disclosed below are all examples, and are not intended to limit the air conditioning system according to the present disclosure.

The exemplary embodiments disclosed below may not describe details more than necessary. For example, details of already well-known matters and a duplicated description of substantially the same configuration may not be described. This is to facilitate understanding of those skilled in the art by avoiding unnecessary redundancy of the description.

### (First exemplary embodiment)

Air conditioning system 1 according to a first exemplary embodiment will be described. Air conditioning system 1 according to the first exemplary embodiment is used in a business in which air conditioner 2 is repeatedly lent to different users by lease or subscription, for example. Air conditioner 2 in this kind of business varies in installation environment, a frequency of use, time of use, and the like depending on a user to whom air conditioner 2 is lent, and thus consumption speed of air conditioner 2 varies. When air conditioner 2 lent to a previous user by lease or subscription is lent to a subsequent user, more accurate prediction of a remaining life of air conditioner 2 is required to ensure normal operation within the next lending period.

Air conditioning system 1 according to the first exemplary embodiment includes inspection terminal 21 that calculates a remaining life of air conditioner 2 from a first consumption life of air conditioner 2 calculated based on first operation time and a second consumption life of air conditioner 2 calculated based on second operation time. Inspection terminal 21 further outputs information on the remaining life of air conditioner 2. Thus, air conditioning system 1 according to the first exemplary embodiment can more accurately predict the remaining life of air conditioner 2.

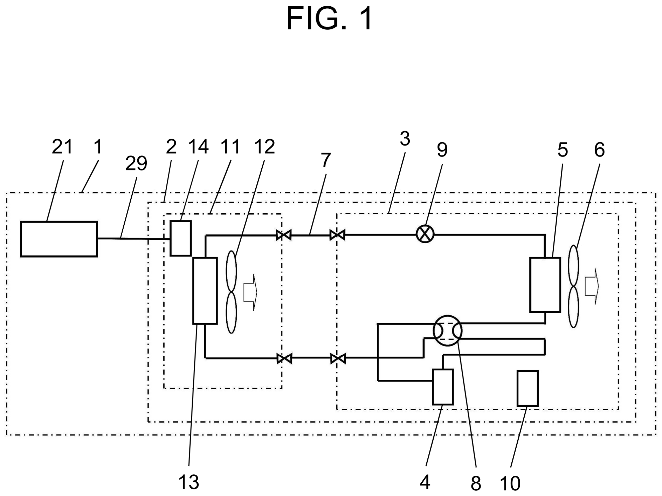

Fig. 1 is a block diagram illustrating air conditioning system 1 according to the first exemplary embodiment. With reference to Fig. 1, a general configuration of air conditioning system 1 will be described.

Air conditioning system 1 according to the first exemplary embodiment includes air conditioner 2 including outdoor unit 3 installed outdoors and indoor unit 11 installed indoors. Air conditioner 2 is capable of performing operation control by switching between a first operation mode and a second operation mode. The operation modes will be described later. Air conditioning system 1 according to the first exemplary embodiment includes inspection terminal 21 that inspects the remaining life of air conditioner 2. Although details will be described later, inspection terminal 21 calculates the remaining life of air conditioner 2 and outputs information on the remaining life.

Outdoor unit 3 according to the first exemplary embodiment includes a housing (not illustrated) that internally includes at least compressor 4 that compresses a refrigerant, outdoor heat exchanger 5 that exchanges heat between outside air and the refrigerant, outdoor blower 6 that blows air to outdoor heat exchanger 5 to promote heat exchange between the refrigerant and air, and P plate 10 that controls outdoor unit 3.

Outdoor unit 3 also includes four-way valve 8 that switches a refrigerant flow channel, and electronic expansion valve 9 that decompresses the refrigerant.

Indoor unit 11 according to the first exemplary embodiment includes a housing (not illustrated) that internally includes indoor heat exchanger 13 that exchanges heat between indoor air and the refrigerant, indoor blower 12 that blows air to indoor heat exchanger 13 to promote heat exchange between the refrigerant and the indoor air, and P plate 14 that controls indoor unit 11. P plate 14 is connected to inspection terminal 21 by wired cable 29.

Compressor 4, four-way valve 8, outdoor heat exchanger 5, and electronic expansion valve 9 of outdoor unit 3, and indoor heat exchanger 13 of indoor unit 11 are sequentially connected through refrigerant pipe 7 to constitute a refrigeration cycle.

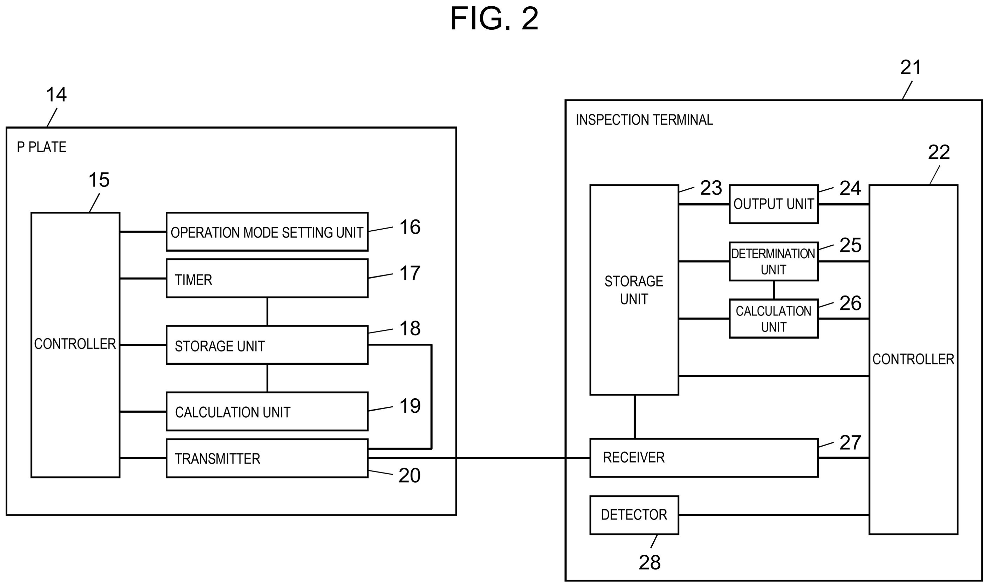

Fig. 2 is a block diagram illustrating P plate 14 and inspection terminal 21 according to the first exemplary embodiment.

With reference to Fig. 2, operations of P plate 14 and inspection terminal 21 will be described.

P plate 14 is an electronic board that controls operation of air conditioner 2 and manages, calculates, and stores information on the remaining life.

P plate 14 includes operation mode setting unit 16, timer 17, storage unit 18, calculation unit 19, transmitter 20, and controller 15 that controls them. Controller 15 controls the operation of air conditioner 2 by switching between the first operation mode and the second operation mode. Controller 15 may be a dedicated hardware circuit that implements the above control, or a function of controller 15 may be implemented by a processor executing a program stored in a memory.

Operation mode setting unit 16 can set air conditioner 2 to one operation mode selected from a plurality of operation modes. Specific examples of the plurality of operation modes include a six-tatami mat space mode corresponding to the first operation mode of the present disclosure, an eight-tatami mat space mode corresponding to the second operation mode of the present disclosure, and a ten-tatami mat space mode corresponding to a third operation mode. Then, operation mode setting unit 16 can set one mode selected from the three modes. As described above, the six-tatami mat space mode, the eight-tatami mat space mode, and the ten-tatami mat space mode are operation modes that are each set in accordance with a size of a space in which air conditioner 2 is installed and that are different in output ranges.

When an indoor unit set to perform an operation suitable for a six-tatami mat space is installed and operated in an eight-tatami mat space wider than the six-tatami mat space, efficient air conditioning is usually difficult due to a lack of capacity. However, air conditioner 2 can change the six-tatami mat space mode to the eight-tatami mat space mode in response to a request of the user. Thus, even when the air conditioner is installed and operated in the eight-tatami mat space, efficient air conditioning can be performed by changing the setting to that suitable for the eight-tatami mat space. As a matter of course, air conditioner 2 can be changed from the eight-tatami mat space mode to the six-tatami mat space mode, and can be also changed from the six-tatami mat space mode or the eight-tatami mat space mode to the ten-tatami mat space mode.

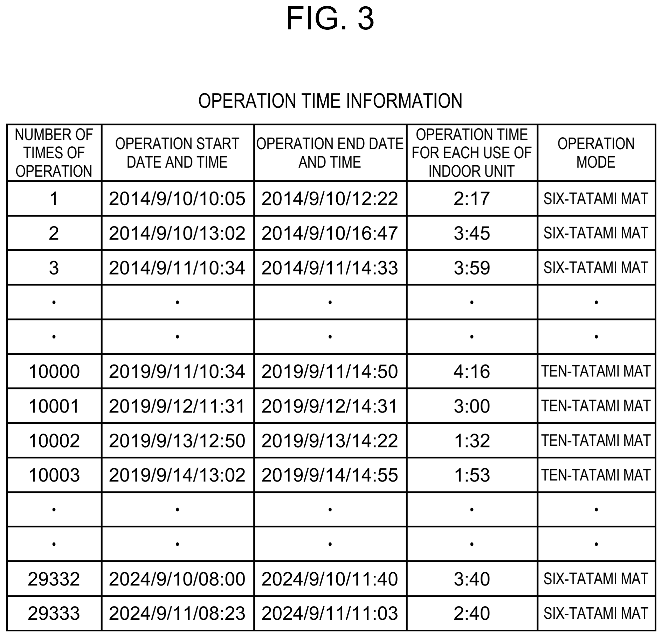

Timer 17 clocks time when air conditioner 2 operates. Specifically, timer 17 clocks a time ("operation start date and time" in Fig. 3) at which the user instructs air conditioner 2 to start the operation and air conditioner 2 is started and a time ("operation end date and time" in Fig. 3) at which the user instructs air conditioner 2 to end the operation and air conditioner 2 ends the operation.

Storage unit 18 stores information on time during which air conditioner 2 has operated. Storage unit 18 stores the time of operation measured by timer 17 as time information. More specifically, storage unit 18 stores the first operation time during which air conditioner 2 operates in the first operation mode and the second operation time during which air conditioner 2 operates in the second operation mode. The first operation time and the second operation time will be described later.

Calculation unit 19 calculates operation time for each use of the indoor unit of air conditioner 2 based on the time information stored in storage unit 18. The operation time is calculated for each operation mode. Storage unit 18 stores the calculated operation time for each use of the indoor unit.

Storage unit 18 may be a temporary storage region such as a static random access memory (SRAM) or a dynamic random access memory (DRAM), a non-volatile storage region such as a large-capacity memory or a hard disk, or an external storage device connected to a server, for example.

Fig. 3 is a diagram illustrating a table representing operation time information stored in storage unit 18. With reference to Fig. 3, the operation time information stored in storage unit 18 will be described. The operation time information includes the number of times of operation, an operation start date and time, an operation end date and time, an operation time for each use of the indoor unit, and an operation mode. Calculation unit 19 calculates the operation time for each use of the indoor unit from the operation start date and time and the operation end date and time measured by timer 17. Storage unit 18 stores the operated operation mode for each number of times of operation. The operation time information is transmitted from transmitter 20 to inspection terminal 21.

Inspection terminal 21 calculates and manages the remaining life of air conditioner 2, and includes controller 22, storage unit 23, output unit 24, determination unit 25, calculation unit 26, receiver 27, and detector 28.

Inspection terminal 21 is a smartphone, a tablet terminal, a laptop personal computer (PC), or a desktop PC, for example. Inspection terminal 21 may be implemented by one terminal device, may be implemented by a plurality of terminal devices, or may be implemented by a virtual device such as a cloud computer. Inspection terminal 21 also has a function necessary for the user to operate inspection terminal 21. Inspection terminal 21 includes a touch panel, a keyboard, and a mouse, for example.

Inspection terminal 21 may be configured to be connected to another terminal, a device, or the like through a communication adapter or the like while allowing wireless communication with each other. Inspection terminal 21 may be also configured to be connected while allowing wired communication using a communication cable such as a USB cable. As described above, inspection terminal 21 is connected to P plate 14 (air conditioner 2) using wired cable 29.

Controller 22 includes a processor such as a central processing unit (CPU) or a micro-processing unit (MPU), for example.

Storage unit 23 may be a temporary storage region such as an SRAM or a DRAM, a non-volatile storage region such as a large-capacity memory or a hard disk, or an external storage device connected to a server, for example.

Calculation unit 26 calculates a remaining life of air conditioner 2 from a first consumption life of air conditioner 2 calculated based on the first operation time and a second consumption life of air conditioner 2 calculated based on the second operation time.

Output unit 24 has a function necessary for operating inspection terminal 21, for example. Considered examples of the form for implementing output include a liquid crystal display, a PC display, display such as projection on a projector, and output of sound, signal, and light. The present disclosure does not particularly limit a function by an output method. Output unit 24 outputs information on the remaining life of air conditioner 2 calculated by calculation unit 26.

Inspection terminal 21 receives the operation time information transmitted from transmitter 20 of P plate 14 by using receiver 27, calculates a remaining life of air conditioner 2 based on the operation time information, and notifies the remaining life.

Controller 22 controls operations of storage unit 23, output unit 24, determination unit 25, calculation unit 26, receiver 27, and detector 28.

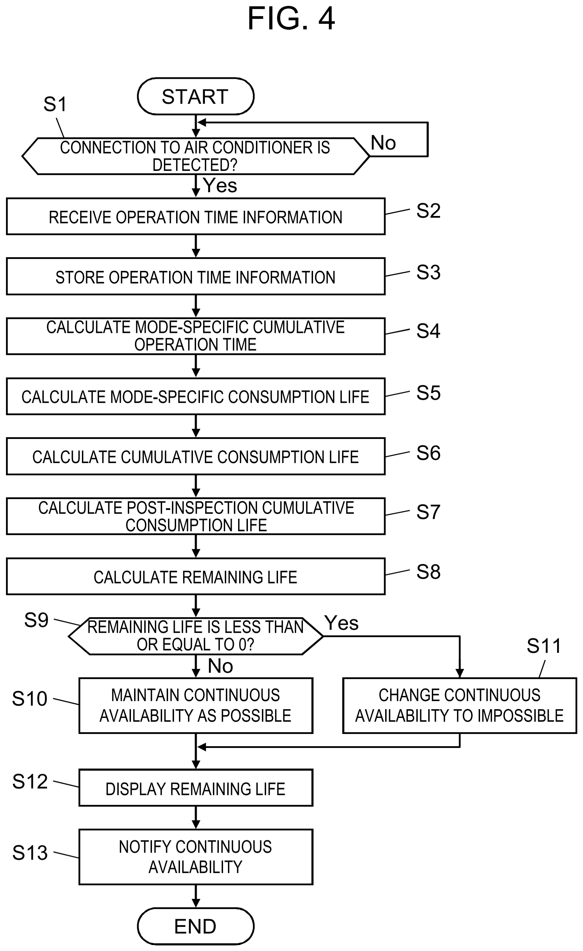

Fig. 4 is a flowchart illustrating an operation of inspection terminal 21 according to the first exemplary embodiment.

With reference to Fig. 4, the operation of inspection terminal 21 that manages a remaining life of air conditioner 2 will be described. In particular, inspection terminal 21, which calculates a remaining life of air conditioner 2 and notifies continuous availability, is used for predicting the remaining life of air conditioner 2 before air conditioner 2 is lent to a subsequent user after a lending period of air conditioner 2 lent to a user by subscription ends, for example.

When inspection terminal 21 is started to be used, detector 28 of inspection terminal 21 starts detecting connection to air conditioner 2 (step S1).

When detector 28 detects the connection to air conditioner 2 ("Yes" in step S1), receiver 27 receives the operation time information transmitted from transmitter 20 (step S2). When detector 28 does not detect the connection to air conditioner 2 ("No" in step S1), detector 28 continues to detect the connection to air conditioner 2 (step S1).

When receiver 27 receives the operation time information from transmitter 20 (step S2), storage unit 23 stores the operation time information received by receiver 27 (step S3). Step S3 corresponds to an example of a storage step of the present disclosure. Instead of step S3, a step of storing the operation time information by using storage unit 18 of air conditioner 2 can also be said to correspond to an example of the storage step of the present disclosure, although the step is not specifically illustrated and described.

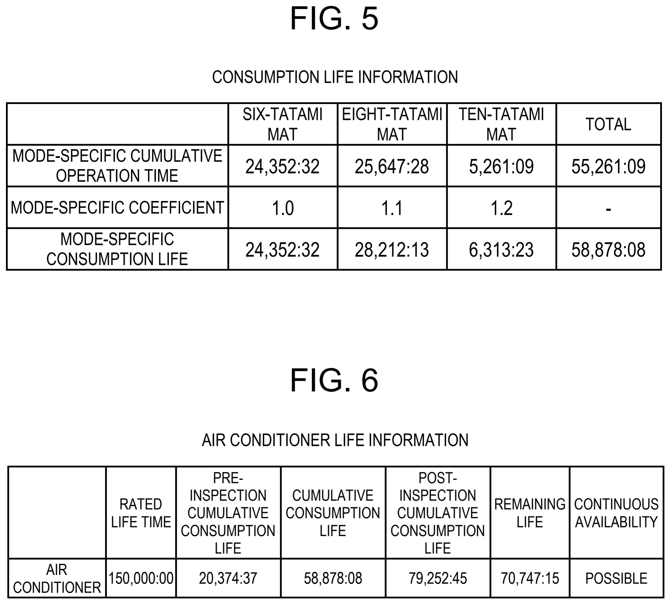

Fig. 5 is a diagram illustrating a table representing consumption life information stored in storage unit 23. The consumption life information calculated by inspection terminal 21 based on the operation time information received from air conditioner 2 includes a mode-specific cumulative operation time, a mode-specific coefficient, and a mode-specific consumption life.

When storage unit 23 stores the operation time information (step S3), calculation unit 26 calculates the mode-specific cumulative operation time based on the operation time information stored in storage unit 23 (step S4). Specifically, calculation unit 26 calculates the mode-specific cumulative operation time based on the operation time for each use of the indoor unit in the operation time information and the operation mode. More specifically, calculation unit 26 calculates the mode-specific cumulative operation time by adding every operation time for each use of the indoor unit in the same operation mode. For example, the mode-specific cumulative operation time of the six-tatami mat space mode is 24352 hours and 32 minutes, the mode-specific cumulative operation time of the eight-tatami mat space mode is 25647 hours and 28 minutes, and the mode-specific cumulative operation time of the ten-tatami mat space mode is 5261 hours and 9 minutes, as illustrated in Fig. 5. The first exemplary embodiment shows the mode-specific cumulative operation time in the six-tatami mat space mode that corresponds to the first operation time, and the mode-specific cumulative operation time in the eight-tatami mat space mode that corresponds to the second operation time. Calculation unit 26 registers (updates) the calculated mode-specific cumulative operation time for each operation mode in the consumption life information in storage unit 23.

Calculation unit 26 further calculates the mode-specific consumption life based on the mode-specific cumulative operation time and the mode-specific coefficient (step S5). Specifically, calculation unit 26 calculates the mode-specific consumption life by obtaining a product of the mode-specific cumulative operation time and the corresponding mode-specific coefficient. When the six-tatami mat space mode is defined as a reference, the life of air conditioner 2 is considered to be more affected by operation in the eight-tatami mat space mode or the ten-tatami mat space mode than operation in the six-tatami mat space mode. Calculation unit 26 multiplies the mode-specific cumulative operation time by a coefficient to accurately calculate time that affects the life of air conditioner 2. For example, calculation unit 26 calculates the mode-specific consumption life using a mode-specific coefficient of 1.0 of the six-tatami mat space mode, which is defined as a reference, a mode-specific coefficient of 1.1 of the eight-tatami mat space mode, and a mode-specific coefficient of 1.2 of the ten-tatami mat space mode. The first exemplary embodiment shows the mode-specific consumption life of the six-tatami mat space mode that corresponds to the first consumption life of air conditioner 2, and the mode-specific consumption life of the eight-tatami mat space mode that corresponds to the second consumption life of air conditioner 2. Calculation unit 26 registers (updates) the calculated mode-specific consumption life for each operation mode in the consumption life information in storage unit 23.

Fig. 6 is a diagram illustrating a table representing air conditioner life information stored in storage unit 23. Inspection terminal 21 uses the air conditioner life information to calculate a remaining life of air conditioner 2, the air conditioner life information including a rated lifetime of air conditioner 2, a pre-inspection cumulative consumption life, a cumulative consumption life, a post-inspection cumulative consumption life, a remaining life, and continuous availability. The rated lifetime is a time required from a start of use of air conditioner 2 to an unusable state, and is set in advance. The rated lifetime is 150,000 hours, for example. The pre-inspection cumulative consumption life indicates how long air conditioner 2 has been used by a previous user to whom air conditioner 2 is lent before air conditioner 2 is lent to a subsequent user. When inspection terminal 21 starts inspection of air conditioner 2 (e.g., after processing in step S3), a post-inspection cumulative consumption life at a previous inspection is set as the pre-inspection cumulative consumption life in advance, for example. The cumulative consumption life is a time indicating how much use of a user affects a life of air conditioner 2. The post-inspection cumulative consumption life is a time indicating how long air conditioner 2 has been used after a lending period of air conditioner 2 lent to a user ends. The remaining life is a time indicating how long air conditioner 2 is usable in the future. The continuous availability is information indicating whether air conditioner 2 can be continuously used.

Calculation unit 26 calculates the cumulative consumption life based on the mode-specific consumption life in each operation mode (step S6). Specifically, calculation unit 26 calculates the cumulative consumption life by adding every mode-specific consumption life of each operation mode. Calculation unit 26 registers (updates) the calculated cumulative consumption life in the air conditioner life information in storage unit 23.

Calculation unit 26 further calculates the post-inspection cumulative consumption life based on the pre-inspection cumulative consumption life and the cumulative consumption life (step S7). Specifically, calculation unit 26 calculates the post-inspection cumulative consumption life by adding the cumulative consumption life to the pre-inspection cumulative consumption life. Calculation unit 26 registers (updates) the calculated post-inspection cumulative consumption life in the air conditioner life information in storage unit 23.

After calculation unit 26 calculates the post-inspection cumulative consumption life (step S7), calculation unit 26 calculates the remaining life based on the rated lifetime and the post-inspection cumulative consumption life (step S8). Specifically, calculation unit 26 calculates the remaining life by subtracting the post-inspection cumulative consumption life from the rated lifetime. Calculation unit 26 registers (updates) the calculated remaining life in the air conditioner life information in storage unit 23. Steps S5 to S8 correspond to an example of a calculation step of the present disclosure.

When calculation unit 26 calculates the remaining life of air conditioner 2 (step S8), determination unit 25 determines whether the remaining life calculated by calculation unit 26 remains (step S9).

When the remaining life remains ("No" in step S9), controller 22 maintains the continuous availability of air conditioner 2 stored in storage unit 23 as "possible" (step S10). When the remaining life does not remain ("Yes" in step S9), controller 22 changes the continuous availability of air conditioner 2 stored in storage unit 23 to "impossible" in the air conditioner life information stored in storage unit 23 (step S11).

When controller 22 maintains the continuous availability of air conditioner 2 stored in storage unit 23 as the "possible" or changes it to the "impossible" (step S10 or step S11), output unit 24 displays the remaining life of air conditioner 2 (step S12). Step S12 corresponds to an example of an output step of the present disclosure.

When output unit 24 displays the remaining life of air conditioner 2 (step S12), output unit 24 notifies the continuous availability of air conditioner 2 (step S13). Contents of the notification vary depending on a state of the continuous availability of air conditioner 2. Specifically, when the continuous availability is "possible", the continuous availability is notified, and then air conditioner 2 is lent to any user again by lease or subscription. When the continuous availability is "impossible", unavailability of continuous use is notified, and then disposal or repair is recommended.

When output unit 24 notifies the continuous availability of air conditioner 2 (step S13), inspection terminal 21 ends the inspection.

Although inspection terminal 21 calculates the remaining life of air conditioner 2, air conditioner 2 may calculate the remaining life. This configuration requires inspection terminal 21 to only include output unit 24 and only have a function of notifying the remaining life calculated by air conditioner 2.

Alternatively, air conditioning system 1 may be configured without inspection terminal 21 to cause air conditioner 2 having a function of calculating the remaining life to be communicable to a terminal that notifies the remaining life of air conditioner 2. Examples of the terminal that notifies the remaining life include a mobile phone, a smartphone, and a personal computer.

### (Second exemplary embodiment)

Air conditioning system 1 according to a second exemplary embodiment will be described.

Air conditioner 2 in the second exemplary embodiment is identical in configuration to that of the first exemplary embodiment, so that air conditioning system 1 according to the second exemplary embodiment will be described with reference to the drawings (Figs. 1 and 2) of the first exemplary embodiment.

Air conditioning system 1 according to the second exemplary embodiment is different from air conditioning system 1 according to the first exemplary embodiment in managing a remaining life of each of a first component and a second component constituting air conditioner 2. Grasping the remaining life of each component enables a remaining life of air conditioner 2 to be more accurately determined. Additionally, a component that needs to be replaced can be accurately determined.

Specific examples of the first component and the second component include compressor 4 and outdoor heat exchanger 5 illustrated in Fig. 1. That is, air conditioning system 1 according to the second exemplary embodiment includes the first component and the second component.

Air conditioning system 1 according to the second exemplary embodiment includes calculation unit 26 that calculates the remaining life of the first component from a first consumption life of the first component calculated based on first operation time and a second consumption life of the first component calculated based on second operation time. Calculation unit 26 also calculates the remaining life of the second component from a first consumption life of the second component calculated based on the first operation time and a second consumption life of the second component calculated based on the second operation time. Then, calculation unit 26 determines the remaining life of air conditioner 2 from the remaining life of the first component and the remaining life of the second component.

Thus, air conditioning system 1 according to the second exemplary embodiment can manage the remaining life of the air conditioner 2 with high accuracy by calculating the remaining life of each component.

Operation of inspection terminal 21 according to the second exemplary embodiment will be described.

As in the first exemplary embodiment, operation time information is transmitted from transmitter 20 of P plate 14 to receiver 27 of inspection terminal 21.

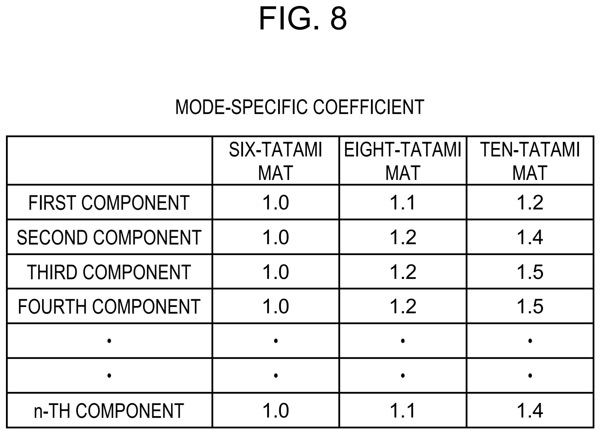

Fig. 8 is a diagram illustrating a table representing a mode-specific coefficient that is for each component and stored in storage unit 23. For example, the first component has a mode-specific coefficient of 1.0 of the six-tatami mat space mode, a mode-specific coefficient of 1.1 of the eight-tatami mat space mode, and a mode-specific coefficient of 1.2 of the ten-tatami mat space mode.

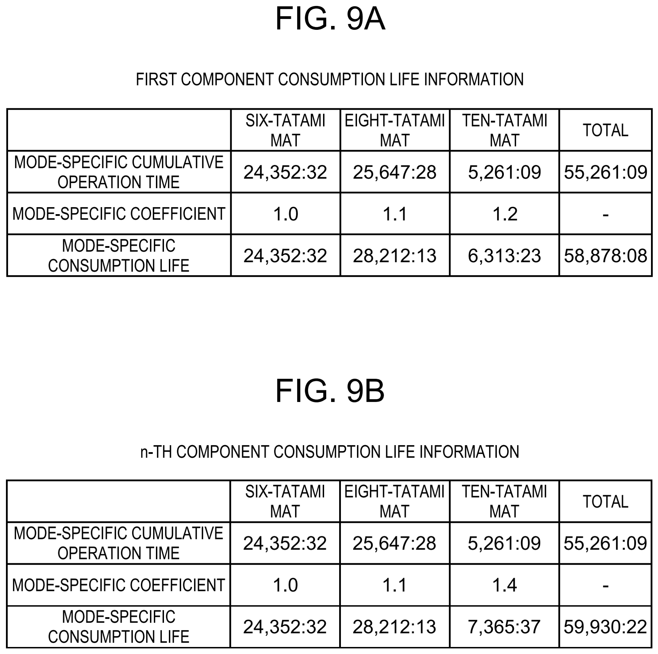

Fig. 9A is a diagram illustrating a table representing first component consumption life information calculated by inspection terminal 21 based on operation time information received from air conditioner 2. Fig. 9B is a diagram illustrating a table representing n-th component consumption life information calculated by inspection terminal 21 based on operation time information received from air conditioner 2. The first component consumption life information and the n-th component consumption life information are stored in storage unit 23. The first component consumption life information and the n-th component consumption life information each include a mode-specific cumulative operation time, a mode-specific coefficient, and a mode-specific consumption life. When the number of components constituting air conditioner 2 is assumed to be a maximum value, the n-th component consumption life information includes consumption life information in the order of one to consumption life information in the order of the maximum value. Fig. 9A is a diagram illustrating a table representing the component consumption life information in the order of one, the table representing the first component consumption life information.

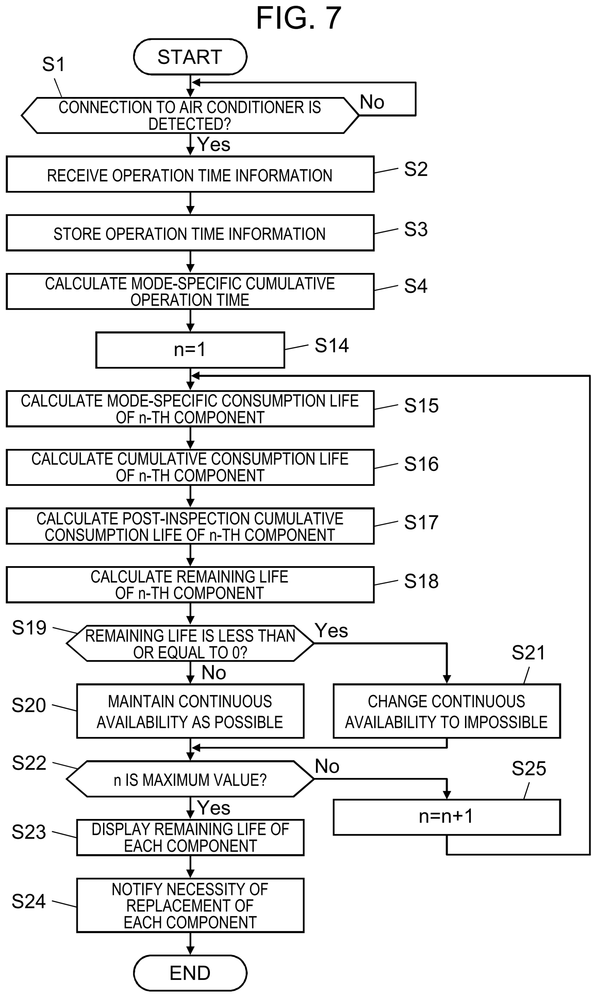

With reference to Fig. 7, operation of inspection terminal 21 according to the second exemplary embodiment, inspection terminal 21 being configured to manage a remaining life of air conditioner 2, will be described. For example, inspection terminal 21 is used for measuring a remaining life of air conditioner 2 when a lending period of air conditioner 2 lent to a user by subscription ends.

Steps S1 to S4 in Fig. 7 are similar to steps S1 to S4 in Fig. 4, respectively.

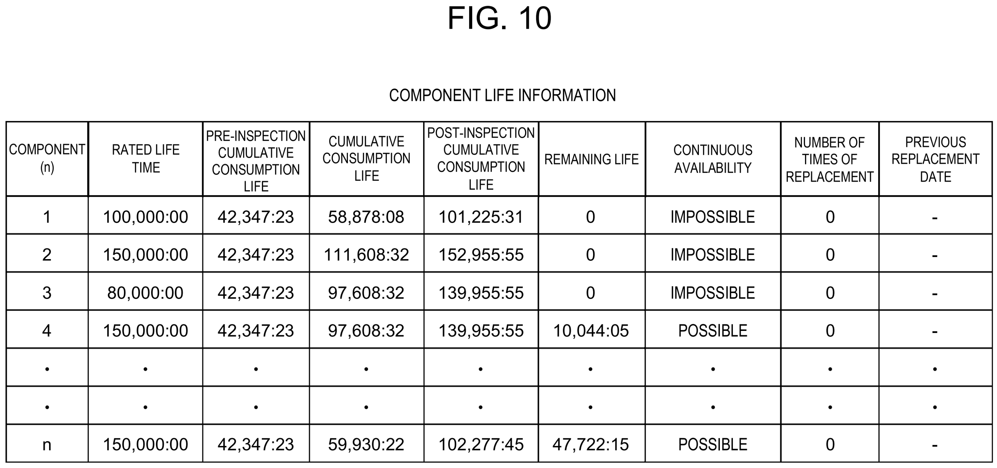

Inspection terminal 21 manages a component to be inspected by number. Specifically, inspection terminal 21 recognizes the first component as "n = 1" and the second component as "n = 2". The flowchart of Fig. 7 shows that inspection terminal 21 starts inspection from "n = 1" (step S14). Hereinafter, inspection terminal 21 inspects the n-th component as the first component. Calculation unit 26 calculates a mode-specific consumption life of the first component based on the mode-specific cumulative operation time and the mode-specific coefficient (step S15). Specifically, calculation unit 26 calculates the mode-specific consumption life by obtaining a product of the mode-specific cumulative operation time and the corresponding mode-specific coefficient. For example, calculation unit 26 calculates the mode-specific consumption life using a mode-specific coefficient of 1.0 of the six-tatami mat space mode, which is defined as a reference, a mode-specific coefficient of 1.1 of the eight-tatami mat space mode, and a mode-specific coefficient of 1.2 of the ten-tatami mat space mode. The second exemplary embodiment shows the mode-specific consumption life of the six-tatami mat space mode that corresponds to the first consumption life of the first component, and the mode-specific consumption life of the eight-tatami mat space mode that corresponds to the second consumption life of the first component. Calculation unit 26 registers (updates) the calculated mode-specific consumption life for each operation mode in the first component consumption life information in storage unit 23. Fig. 10 is a table illustrating component life information used when inspection terminal 21 manages a life of each component of air conditioner 2. The component life information is stored in storage unit 23. The component life information includes a rated lifetime, a pre-inspection cumulative consumption life, a cumulative consumption life, a post-inspection cumulative consumption life, a remaining life, continuous availability, the number of times of replacement, and a previous replacement date. The rated lifetime is a time required from a start of use of each component to an unusable state, and is set in advance. The rated lifetime is 100,000 hours for the first component and 150,000 hours for the second component, for example. The pre-inspection cumulative consumption life indicates how long each component has been used by a previous user to whom air conditioner 2 is lent before air conditioner 2 is lent to a subsequent user. When inspection terminal 21 starts inspection of air conditioner 2 (e.g., after processing in step S3), a post-inspection cumulative consumption life at a previous inspection is set as the pre-inspection cumulative consumption life in advance, for example. The cumulative consumption life is a time indicating how much use of a user affects a life of each component. The post-inspection cumulative consumption life is a time indicating how long each component has been used after a lending period of air conditioner 2 lent to a user ends. The remaining life is a time indicating how long each component is usable. The continuous availability is information indicating whether each component can be continuously used. The number of times of replacement is information indicating how many times each component has been replaced so far. The previous replacement date is information indicating a date when each component was previously replaced.

When calculation unit 26 calculates the mode-specific consumption life of the first component (step S15), calculation unit 26 calculates a cumulative consumption life based on the mode-specific consumption life in each operation mode of the first component (step S16). Specifically, calculation unit 26 calculates the cumulative consumption life by adding every mode-specific consumption life of each operation mode. Calculation unit 26 registers (updates) the calculated cumulative consumption life of the first component in the component life information in storage unit 23.

Calculation unit 26 further calculates the post-inspection cumulative consumption life of the first component based on the pre-inspection cumulative consumption life of the first component and the cumulative consumption life of the first component (step S17). Specifically, calculation unit 26 calculates the post-inspection cumulative consumption life of the first component by adding the cumulative consumption life of the first component to the pre-inspection cumulative consumption life of the first component. Calculation unit 26 registers (updates) the calculated post-inspection cumulative consumption life of the first component in the component life information in storage unit 23.

After calculation unit 26 calculates the post-inspection cumulative consumption life of the first component (step S17), calculation unit 26 calculates the remaining life of the first component based on the rated lifetime of the first component and the post-inspection cumulative consumption life of the first component (step S18). Specifically, calculation unit 26 calculates the remaining life of the first component by subtracting the post-inspection cumulative consumption life of the first component from the rated lifetime of the first component. Calculation unit 26 registers (updates) the calculated remaining life of the first component in the component life information in storage unit 23.

When calculation unit 26 calculates the remaining life of the first component (step S18), determination unit 25 determines whether the remaining life calculated by calculation unit 26 remains (step S19).

When the remaining life remains ("No" in step S19), controller 22 maintains the continuous availability of the first component stored in storage unit 23 as "possible" (step S20). When the remaining life does not remain ("Yes" in step S19), controller 22 changes the continuous availability of the first component stored in the storage unit 23 to "impossible" (step S21).

When controller 22 maintains the continuous availability of the first component stored in the storage unit 23 as "possible" or changes the continuous availability to "impossible" (step S20 or step S21), inspection terminal 21 determines whether the number of the n-th component to be inspected is a maximum value when the number of the components constituting air conditioner 2 is the maximum value (step S22).

When the number n of the n-th component is not the maximum value ("No" in step S22), 1 is added to n (step S25). Specifically, when the number n is 1, the number n becomes 2.

After that, calculation unit 26 calculates the mode-specific consumption life based on the mode-specific cumulative operation time and the mode-specific coefficient (step S15). The number n is 2 at this time, so that calculation unit 26 inspects the n-th component as the second component.

When the number n is the maximum value ("Yes" in step S22), output unit 24 displays a remaining life of each component constituting air conditioner 2 (step S23).

When output unit 24 displays the remaining life of each component (step S23), output unit 24 notifies necessity of replacement of each component constituting air conditioner 2 (step S24). Contents of the notification vary depending on a state of the continuous availability of each component. Specifically, a component with the continuous availability indicated as "possible" is notified that the component can be continuously used. A component with the continuous availability indicated as "impossible" is notified that the component cannot be continuously used, and then replacement or repair is recommended.

When output unit 24 notifies whether each component needs to be replaced (step S24), the inspection ends.

After the inspection ends, controller 22 updates the component life information on the component with the continuous availability notified as "impossible". Exactly, controller 22 updates the component life information on the component with the continuous availability notified as "impossible" and being replaced. Specifically, controller 22 updates each of the pre-inspection cumulative consumption life, the cumulative consumption life, and the post-inspection cumulative consumption life to 0 hour, and updates the remaining life to a value of the rated lifetime. Controller 22 also updates the continuous availability to "possible", adds 1 to the number of times of replacement, and updates the previous replacement date to a date of the inspection. Controller 22 does not update information on a component that has not been replaced in spite of the continuous availability having been notified as "impossible".

As described above with reference to the flowchart of Fig. 7, calculation unit 26 of inspection terminal 21 calculates the remaining life of the first component from the first consumption life of the first component calculated based on the first operation time and the second consumption life of the first component calculated based on the second operation time. Calculation unit 26 also calculates the remaining life of the second component from the first consumption life of the second component calculated based on the first operation time and the second consumption life of the second component calculated based on the second operation time. Then, output unit 24 of inspection terminal 21 outputs information on the remaining life of the first component and information on the remaining life of the second component. In addition to the processing illustrated in the flowchart of Fig. 7, calculation unit 26 may determine the remaining life of air conditioner 2 from the remaining life of the first component and the remaining life of the second component. For example, calculation unit 26 may compare the remaining life of the first component with the remaining life of the second component to determine the remaining life with a smaller value as the remaining life of air conditioner 2. When the number of the components constituting air conditioner 2 is larger than 2, calculation unit 26 may compare the remaining life of every component and determine the remaining life with a minimum value as the remaining life of air conditioner 2. In these cases, output unit 24 may display the remaining life of air conditioner 2 together with the remaining life of each component.

Air conditioning system 1 described in the first and second exemplary embodiments can accurately predict the remaining life of each of air conditioner 2 and the component, the remaining life changing depending on the operation mode.

After remaining life management is finished by inspection terminal 21, air conditioner 2 is lent to any user again by subscription. Alternatively, after a component required to be replaced is replaced, air conditioner 2 is lent to any user.

Inspection terminal 21 can manage an accurate remaining life of air conditioner 2, so that a possibility of failure of air conditioner 2 during a lending period of a user is reduced by setting the lending period suitable for the remaining life.

The lending period can be also set based on a remaining life of a component. For example, when every component constituting air conditioner 2 does not need to be replaced, the possibility of failure of air conditioner 2 during the lending period of the user is reduced by setting the lending period suitable for the remaining life of the component with the smallest remaining life.

Additionally, a component required to be replaced can be accurately determined, so that the possibility of failure of air conditioner 2 due to forgetting to replace the component, for example, is reduced.

Air conditioning system 1 described in the first exemplary embodiment and the second exemplary embodiment may be configured such that each of blocks including controller 15, operation mode setting unit 16, timer 17, storage unit 18, calculation unit 19, transmitter 20, controller 22, storage unit 23, output unit 24, determination unit 25, calculation unit 26, the receiver 27, and detector 28 is individually integrated into one chip using a semiconductor device such as an LSI, or is integrated into one chip including a part or all of the blocks.

A part or all of processing of each functional block of the first and second exemplary embodiments may be implemented by a computer program. Each processing of the above exemplary embodiments may be implemented by hardware such as a microcomputer, a microcontroller, or an integrated circuit, or may be implemented by software (including implementation together with an operating system (OS), middleware, or a predetermined library). Additionally, each processing of the above exemplary embodiments may be implemented by processing of a mixture of software and hardware. That is, each processing of the above exemplary embodiments may be implemented by a processor executing a computer program stored in a memory.

Additionally, procedure of a processing method in each of the first exemplary embodiment and the second exemplary embodiment is not necessarily limited to the description of the exemplary embodiments described above, and the procedure can be changed without departing from the gist of the present disclosure.

A processing method performed in air conditioning system 1, a computer program for causing a computer to perform the processing method, and a computer-readable recording medium recording the program are included in the scope of the present disclosure. Here, examples of the computer-readable recording medium include a flexible disk, a hard disk, a CD-ROM, an MO, a DVD, a DVD-ROM, a DVD-RAM, a BD (Blu-ray (registered trademark) disc), and a semiconductor memory. The computer program is not limited to being recorded in the recording medium, and may be transmitted through a telecommunication line, a wireless or wired communication line, a network represented by the Internet, or the like.

### (Operation mode)

The first and second exemplary embodiments described above have shown the first operation mode being the six-tatami mat space mode, the second operation mode being the eight-tatami mat space mode, and the third operation mode being the ten-tatami mat space mode.

The first operation mode, the second operation mode, and the third operation mode are not limited to the six-tatami mat space mode, the eight-tatami mat space mode, and the ten-tatami mat space mode, respectively, and may be other tatami mat space modes or modes suitable for size of other spaces. Besides an operation mode suitable for size of a space, an operation mode that can be freely changed by a user, such as a cooling operation, a heating operation, or a dehumidifying operation, may be used.

The first operation mode, the second operation mode, and the third operation mode may be each an operation mode in accordance with the rated capacity of air conditioner 2. Examples of the rated capacity include 2.2 kW, 2.4 kW, and 2.6 kW. Changing the operation mode of air conditioner 2 in accordance with the rated capacity enables increasing or reducing air conditioning even in a space equal in size.

Although the first operation mode, the second operation mode, and the third operation mode are each illustrated as the operation mode, operation mode setting unit 16 is only required to enable any one of two or more operation modes to be set to air conditioner 2. Specifically, the first operation mode and the second operation mode may be only settable as the operation mode. Operation mode setting unit 16 may allow any one of four or more operation modes to be settable as the operation mode.

### (Modification)

Although the configuration of the present disclosure has been described above based on the exemplary embodiments, the present disclosure is not limited to the exemplary embodiments. Numerical values and the like described in the exemplary embodiments are each merely a suitable example, and are not limited thereto. Additionally, air conditioning system 1 according to each exemplary embodiment can be appropriately changed in configuration without departing from the scope of a technical idea of the present disclosure.

### (Modification common to each exemplary embodiment)

Air conditioning system 1 is not limited to the configuration in which inspection terminal 21 performs calculation, storage, notification, and the like based on the operation time information transmitted from transmitter 20 of P plate 14 to receiver 27 of inspection terminal 21, and may be configured to allow P plate 14 to perform the calculation, the storage, the notification, and the like based on the operation time information, for example. P plate 14 (that is, air conditioner 2) may have configurations each of which corresponds to one of controller 22, storage unit 23, output unit 24, determination unit 25, calculation unit 26, and detector 28 of inspection terminal 21.

Besides a configuration in which P plate 14 performs control of the operation mode of air conditioner 2 and performs measurement, storage, calculation, and the like of the operation time information, inspection terminal 21 may be configured to perform the control of the operation mode of air conditioner 2 and the measurement, the storage, the calculation, and the like of the operation time information. Inspection terminal 21 may have configurations each of which corresponds to one of controller 15, operation mode setting unit 16, timer 17, storage unit 18, calculation unit 19, and transmitter 20 of P plate 14.

### (Supplementary note)

The above description of the exemplary embodiments discloses the following techniques.

(Technique 1) An air conditioning system of Technique 1 includes an air conditioner and an inspection terminal that inspects a remaining life of the air conditioner. The air conditioner includes a controller that performs operation control by switching the air conditioner between a first operation mode and a second operation mode, and a storage unit that stores a first operation time of operation in the first operation mode and a second operation time of operation in the second operation mode. The inspection terminal includes a calculation unit that calculates the remaining life of the air conditioner from a first consumption life of the air conditioner calculated based on the first operation time and a second consumption life of the air conditioner calculated based on the second operation time, and an output unit that outputs information on the remaining life of the air conditioner.

(Technique 2) An air conditioning system of Technique 2 in the air conditioning system described in Technique 1 is configured such that the first operation mode and the second operation mode are set in accordance with a size of a space in which the air conditioner is installed and are different in an output range from each other.

(Technique 3) An air conditioning system of Technique 3 in the air conditioning system described in Technique 1 or 2 is configured such that the air conditioner further includes a first component and a second component. The calculation unit calculates a remaining life of the first component from a first consumption life of the first component calculated based on the first operation time and a second consumption life of the first component calculated based on the second operation time. The calculation unit also calculates a remaining life of the second component from a first consumption life of the second component calculated based on the first operation time and a second consumption life of the second component calculated based on the second operation time. Then, the calculation unit determines a remaining life of the air conditioner from the remaining life of the first component and the remaining life of the second component.

(Technique 4) An air conditioning system of Technique 4 in the air conditioning system described in Technique 3 is configured such that the calculation unit compares the remaining life of the first component and the remaining life of the second component in the calculation of the remaining life of the air conditioner to determine the remaining life with a smaller value as the remaining life of the air conditioner.

(Technique 5) An air conditioning system of Technique 5 includes an air conditioner and an inspection terminal that inspects a remaining life of the air conditioner. The air conditioner includes a controller that performs operation control by switching the air conditioner between a first operation mode and a second operation mode, a storage unit that stores a first operation time of operation in the first operation mode and a second operation time of operation in the second operation mode, a first component, and a second component. The inspection terminal includes a calculation unit that calculates a remaining life of the first component from a first consumption life of the first component calculated based on the first operation time and a second consumption life of the first component calculated based on the second operation time, and that calculates a remaining life of the second component from the first consumption life of the second component calculated based on the first operation time and the second consumption life of the second component calculated based on the second operation time. The inspection terminal includes an output unit that outputs information on the remaining life of the first component and information on the remaining life of the second component.

(Technique 6) An inspection method of Technique 6 is performed in an air conditioning system including an air conditioner capable of performing operation control by switching between a first operation mode and a second operation mode.

The inspection method includes a storage step of storing a first operation time of operation in the first operation mode and a second operation time of operation in the second operation mode. The inspection method also includes a calculation step of calculating a remaining life of the air conditioner from a first consumption life of the air conditioner calculated based on the first operation time and a second consumption life of the air conditioner calculated based on the second operation time. The inspection method further includes an output step of outputting information on the remaining life of the air conditioner.

(Technique 7) A computer program of Technique 7 causes an air conditioning system to perform the inspection method described in Technique 6.

(Technique 8) A storage medium of Technique 8 is a non-transitory computer-readable storage medium in which a computer program is stored, and the computer program is executed by a processor to implement the inspection method described in Technique 6.

(Technique 9) An air conditioner of Technique 9 is capable of performing operation control by switching between a first operation mode and a second operation mode. The air conditioner includes a storage unit that stores a first operation time of operation in the first operation mode and a second operation time of operation in the second operation mode. The air conditioner also includes a calculation unit that calculates a remaining life of the air conditioner from a first consumption life of the air conditioner calculated based on the first operation time and a second consumption life of the air conditioner calculated based on the second operation time. The air conditioner also includes an output unit that outputs information on the remaining life of the air conditioner.

(Technique 10) An inspection terminal of Technique 10 inspects a remaining life of an air conditioner capable of performing operation control by switching between a first operation mode and a second operation mode. The inspection terminal includes a storage unit that stores a first operation time of operation of the air conditioner in the first operation mode and a second operation time of operation of the air conditioner in the second operation mode. The inspection terminal also includes a calculation unit that calculates a remaining life of the air conditioner from a first consumption life of the air conditioner calculated based on the first operation time and a second consumption life of the air conditioner calculated based on the second operation time. The inspection terminal further includes an output unit that outputs information on the remaining life of the air conditioner.

The present disclosure is applicable to an air conditioning system including an air conditioner that performs air conditioning.

## Claims

1. An air conditioning system comprising:
an air conditioner; and
an inspection terminal that inspects a remaining life of the air conditioner,
the air conditioner including:
a controller that performs operation control by switching the air conditioner between a first operation mode and a second operation mode; and
a storage unit that stores a first operation time of operation in the first operation mode and a second operation time of operation in the second operation mode,
the inspection terminal including;
a calculation unit that calculates the remaining life of the air conditioner from a first consumption life of the air conditioner calculated based on the first operation time and a second consumption life of the air conditioner calculated based on the second operation time; and
an output unit that outputs information on the remaining life of the air conditioner.

2. The air conditioning system according to Claim 1, wherein the first operation mode and the second operation mode are set in accordance with a size of a space in which the air conditioner is installed and are different in an output range from each other.

3. The air conditioning system according to Claim 1 or 2, wherein
the air conditioner further includes a first component and a second component,
the calculation unit is configured to:
calculate a remaining life of the first component from a first consumption life of the first component calculated based on the first operation time and a second consumption life of the first component calculated based on the second operation time;
calculate a remaining life of the second component from a first consumption life of the second component calculated based on the first operation time and a second consumption life of the second component calculated based on the second operation time; and
determine a remaining life of the air conditioner from the remaining life of the first component and the remaining life of the second component.

4. The air conditioning system according to Claim 3, wherein the calculation unit compares the remaining life of the first component and the remaining life of the second component in the calculation of the remaining life of the air conditioner to determine the remaining life with a smaller value as the remaining life of the air conditioner.

5. An air conditioning system comprising:
an air conditioner; and
an inspection terminal that inspects a remaining life of the air conditioner,
the air conditioner including:
a controller that performs operation control by switching the air conditioner between a first operation mode and a second operation mode;
a storage unit that stores a first operation time of operation in the first operation mode and a second operation time of operation in the second operation mode;
a first component; and
a second component,
the inspection terminal including:
a calculation unit that calculates a remaining life of the first component from a first consumption life of the first component calculated based on the first operation time and a second consumption life of the first component calculated based on the second operation time, and that calculates a remaining life of the second component from the first consumption life of the second component calculated based on the first operation time and the second consumption life of the second component calculated based on the second operation time; and
an output unit that outputs information on the remaining life of the first component and information on the remaining life of the second component.

6. An inspection method that is performed in an air conditioning system including an air conditioner that performs operation control by switching between a first operation mode and a second operation mode, the inspection method comprising:
a storage step of storing a first operation time of operation in the first operation mode and a second operation time of operation in the second operation mode;
a calculation step of calculating a remaining life of the air conditioner from a first consumption life of the air conditioner calculated based on the first operation time and a second consumption life of the air conditioner calculated based on the second operation time; and
an output step of outputting information on the remaining life of the air conditioner.

7. A computer program that causes an air conditioning system to perform the inspection method according to Claim 6.

8. A storage medium that is a non-transitory computer-readable storage medium in which a computer program is stored, the computer program being executed by a processor to implement the inspection method according to Claim 6.

9. An air conditioner that performs operation control by switching between a first operation mode and a second operation mode, the air conditioner comprising:
a storage unit that stores a first operation time of operation in the first operation mode and a second operation time of operation in the second operation mode;
a calculation unit that calculates a remaining life of the air conditioner from a first consumption life of the air conditioner calculated based on the first operation time and a second consumption life of the air conditioner calculated based on the second operation time; and
an output unit that outputs information on the remaining life of the air conditioner.

10. An inspection terminal that inspects a remaining life of an air conditioner that performs operation control by switching between a first operation mode and a second operation mode, the inspection terminal comprising:
a storage unit that stores a first operation time of operation of the air conditioner in the first operation mode and a second operation time of operation of the air conditioner in the second operation mode;
a calculation unit that calculates a remaining life of the air conditioner from a first consumption life of the air conditioner calculated based on the first operation time and a second consumption life of the air conditioner calculated based on the second operation time; and
an output unit that outputs information on the remaining life of the air conditioner.
